# EUROPÄISCHE PATENTSCHRIFT

(11) **EP 1 554 351 B1**
(45) Veröffentlichungstag und Bekanntmachung des Hinweises auf die Patenterteilung: **20.09.2006**
(21) Anmeldenummer: 03807838.2
(22) Anmeldetag: 02.10.2003
(51) Int. Cl.: C09B 67/28, C09B 67/38

(54) **FARBSTOFFZUBEREITUNGEN**
DYESTUFF PREPARATIONS
PREPARATIONS DE COLORANTS

(30) Priorität: 04.10.2002 DE 10246209
(43) Veröffentlichungstag der Anmeldung: 20.07.2005
(73) Patentinhaber: BASF Aktiengesellschaft, 67056 Ludwigshafen (DE)
(72) Erfinder: HEES, Ulrike, 68159 Mannheim (DE); KLUGE, Michael, 67071 Ludwigshafen (DE); ALBERT, Bernhard, 67157 Wachenheim (DE); HEISSLER, Heinz, 67227 Frankenthal (DE); FUNKE, Frank, 67067 Ludwigshafen (DE); SIEMENSMEYER, Karl, 67227 Frankenthal (DE); WERNER, Jürgen, 67098 Bad-Dürkheim (DE)
(74) Vertreter: Isenbruck, Günter
(86) Internationale Anmeldenummer: PCT/EP2003/010965
(87) Internationale Veröffentlichungsnummer: WO 2004/033560

(56) Entgegenhaltungen:
- EP-A- 0 463 401
- WO-A-97/46623
- WO-A-99/28397
- US-A- 4 370 144
- US-A- 5 508 389
- DATABASE WPI Section Ch, Week 198536 Derwent Publications Ltd., London, GB; Class A93, AN 1985-219364 XP002269878 & JP 60 139329 A (SANYO KOKUSAKU PULP CO), 24. Juli 1985 (1985-07-24)
- DATABASE WPI Section Ch, Week 199344 Derwent Publications Ltd., London, GB; Class A23, AN 1993-348635 XP002269879 & JP 05 255626 A (KANEBO LTD), 5. Oktober 1993 (1993-10-05)
- DATABASE WPI Section Ch, Week 198536 Derwent Publications Ltd., London, GB; Class A97, AN 1985-219363 XP002269880 & JP 60 139328 A (SANYO KOKUSAKU PULP CO), 24. Juli 1985 (1985-07-24)

## Beschreibung

Die Erfindung betrifft Farbstoffzubereitungen und deren Verwendung, insbesondere für den Ink-Jet-Druck.

Aus DE-A 197 52 333 sind Farbstoffpräparationen bekannt, die für den Ink-Jet-Druck Verwendung finden. Diese enthalten als polymere Dispergiermittel spezielle Arylsulfonsäure-Formaldehyd-Kondensate, wie sie aus US 5,186,846 bekannt sind.

Den bekannten polymeren Dispergiermitteln auf Basis von Naphtalinsulfonsäure-Formaldehyd-Kondensationsprodukten, die in Farbstoffzubereitungen für den Ink-Jet-Druck Verwendung finden, ist das relativ geringe mittlere Molekulargewicht von ca. 2000 bis 9000 g/mol gemeinsam.

Viele der bekannten Dispergiermittel sind schlecht biologisch abbaubar. Leicht biologisch abbaubare Dispergiermittel sind die aus US 5,186,846 bekannten Dispergiermittel auf Basis von Naphtalinsulfonsäure-Formaldehyd-Kondensationsprodukten.

Ferner sind die Auswirkung des Dispergiermittels auf die resultierende Färbung bzw. den Druck zu beachten. Viele der Dispergiermittel des Standes der Technik sind nicht farbneutral und färben das bedruckte Gewebe an. Die aus dem Stand der Technik bekannten, biologisch abbaubaren Naphthalinsulfonsäure-Formaldehyd-Kondensationsprodukte bewirken beispielsweise eine deutliche Anfärbung von bedrucktem Polyestergewebe.

Aufgabe der vorliegenden Erfindung ist es, Farbstoffzubereitungen für den Druck, insbesondere den Ink-Jet-Druck, bereitzustellen, die die Nachteile des Standes der Technik nicht aufweisen. Insbesondere sollen die darin enthaltenen Dispergiermittel aus dem Abwasser eliminierbar sein, sich beim Drucken farbneutral verhalten und stabile Farbstoffdispersionen bilden. Die Dispergiermittel sollen sich mit den üblichen Hilfsmitteln (Additiven) formulieren lassen.

Gelöst wird die Aufgabe durch Farbstoffzubereitungen, enthaltend, jeweils bezogen auf das Gewicht der Zubereitung,
a) 0,1 bis 30 Gew.-% eines oder mehrerer Anthrachinon-, Chinophthalon- oder Azofarbstoffe, die frei sind von ionischen Gruppen als Komponente (A),
b) 0,1 bis 20 Gew.-% eines Dispergiermittels, bestehend aus Naphtalinsulfonsäure-Formaldehyd-Kondensationsprodukt mit einem mittleren Molekulargewicht von mindestens 11 000 g/mol, als Komponente (B),
c) 0,1 bis 90 Gew.-% eines oder mehrerer ein- oder mehrwertiger Alkohole als Komponente (C),
d) 0 bis 5 Gew.-% üblicher Hilfsmittel als Komponente (D), und
e) gegebenenfalls Wasser zur Ergänzung auf 100 Gew.-%.

Darüber hinaus wird die Aufgabe gelöst durch die Verwendung der Farbstoffzubereitungen in Ink-Jet-Druckverfahren und anderen Färbe- oder Druckverfahren.

Als Komponente (A) enthalten die erfindungsgemäßen Farbstoffzubereitungen 0,1 bis 30 Gew.-% eines oder mehrerer Anthrachinon-, Chinophthalon- oder Azofarbstoffe, die frei von ionischen Gruppen sind.

Geeignete Anthrachinonfarbstoffe, die frei von ionischen Gruppen sind, gehorchen z.B. der Formel I 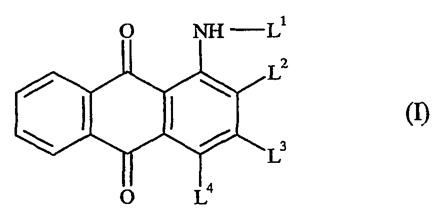 worin
- L¹: Wasserstoff, C₁-C₁₀-Alkyl oder gegebenenfalls durch C₁-C₄-Alkyl, C₁-C₄-Alkoxy, Halogen oder Nitro substituiertes Phenyl,
- L² und L³: unabhängig voneinander jeweils Wasserstoff, gegebenenfalls durch Phenyl oder C₁-C₄-Alkylphenyl substituiertes C₁-C₁₀-Alkoxy, gegebenenfalls durch Phenyl substituiertes C₁-C₁₀-Alkylthio, Halogen, Hydroxyphenyl, C₁-C₄-Alkoxyphenyl, C₁-C₆-Alkanoyl, C₁-C₆-Alkoxycarbonyl oder einen Rest der Formel 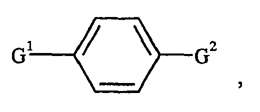 worin G¹ für Sauerstoff oder Schwefel und G² für Wasserstoff oder C₁-C₈₋Monoalkylsulfamoyl, dessen Alkylkette durch 1 oder 2 Sauerstoffatome in Etherfunktion unterbrochen sein kann, stehen, und
- L⁴: gegebenenfalls durch Phenyl oder C₁-C₄-Alkylphenyl substituiertes Amino, Hydroxy oder gegebenenfalls durch Phenyl substituiertes C₁-C₁₀-Alkylthio
bedeuten.

Geeignete Chinophthalonfarbstoffe, die frei von ionischen Gruppen sind, gehorchen z.B. der Formel II 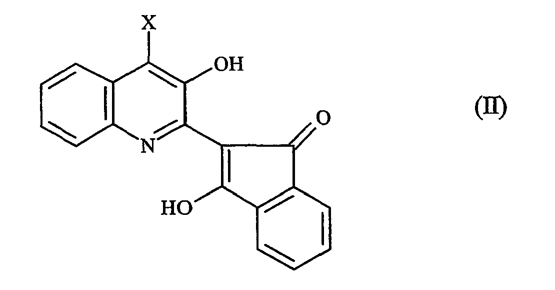 in der X Wasserstoff, Chlor oder Brom bedeutet.

Alle in der obengenannten Formel I auftretenden Alkylgruppen können sowohl geradkettig als auch verzweigt sein.

Wenn in der obengenannten Formel I substituierte Alkylgruppen auftreten, so weisen sie in der Regel 1 oder 2 Substituenten auf.

Wenn in den obengenannten Formeln substituierte Phenylgruppen auftreten, so weisen sie in der Regel 1 bis 3, vorzugsweise 1 oder 2, Substituenten auf.

Es folgt eine beispielhafte Aufzählung von Resten, wie sie in Formel I definiert sind.

Alkylreste sind z.B. Methyl, Ethyl, Propyl, Isopropyl, Butyl, Isobutyl, sec-Butyl, tert-Butyl, Pentyl, Isopentyl, Neopentyl, tert-Pentyl, Hexyl, 2-Methylpentyl, Heptyl, Octyl, 2-Ethylhexyl, Isooctyl, Nonyl, Isononyl, Decyl oder Isodecyl (die Bezeichnungen Isooctyl, Isononyl und Isodecyl sind Trivialbezeichnungen und stammen von den nach der Oxosynthese erhaltenen Alkoholen - vgl. dazu Ullmann's Encyclopedia of Industrial Chemistry, 5^{th} Edition, Vol. A 1, Seiten 290 bis 293, sowie Vol. A 10, Seiten 284 und 285).

Phenylreste sind z.B. Phenyl, 2-, 3- oder 4-Methylphenyl, 2-, 3- oder 4-Ethylphenyl, 2-, 3- oder 4-Propylphenyl, 2-, 3- oder 4-Isopropylphenyl, 2-, 3- oder 4-Butylphenyl, 2,3-, 2,4- oder 2,6-Dimethylphenyl, 2-, 3- oder 4-Methoxyphenyl, 2-, 3- oder 4-Ethoxyphenyl, 2,3-, 2,4- oder 2,6-Dimethoxyphenyl, 2-, 3- oder 4-Fluorphenyl, 2-, 3-oder 4-Chlorphenyl, 2-, 3- oder 4-Bromphenyl oder 2-, 3- oder 4-Nitrophenyl.

Alkylthio- und Phenylthioreste sind z.B. Methylthio, Ethylthio, Propylthio, Isopropylthio, Butylthio, Isobutylthio, Pentylthio, Hexylthio, Heptylthio, Octylthio, Isooctylthio, 2-Ethylhexylthio, Nonylthio, Isononylthio, Decylthio, Isodecylthio, Benzylthio oder 1- oder 2-Phenylethylthio.

Alkoxyreste sind z.B. Methoxy, Ethoxy, Propoxy, Isopropoxy, Butoxy, Isobutoxy, sec-Butoxy, Pentyloxy, Isopentyloxy, Neopentyloxy, tert-Pentyloxy, Hexyloxy, 2-Methylpentyloxy, Heptyloxy, Octyloxy, Isooctyloxy, 2-Ethylhexyloxy, Nonyloxy, Isononyloxy, Decyloxy, Isodecyloxy, Benzyloxy oder 1- oder 2-Phenylethoxy.

Halogen ist z.B. Fluor, Chlor oder Brom.

Alkoxycarbonylreste sind z.B. Methoxycarbonyl, Ethoxycarbonyl, Propoxycarbonyl, Isopropoxycarbonyl, Butoxycarbonyl, Isobutoxycarbonyl, sec-Butoxycarbonyl, Pentyloxycarbonyl, Isopentyloxycarbonyl, Neopentyloxycarbonyl oder Hexyloxycarbonyl.

Alkanoylreste sind z.B. Formyl, Acetyl, Propionyl, Butyryl, Pentanoyl oder Hexanoyl.

Sulfamoylreste sind z.B. Methylsulfamoyl, Ethylsulfamoyl, Propylsulfamoyl, Isopropylsulfamoyl, Butylsulfamoyl, Pentylsulfamoyl, Hexylsulfamoyl, Heptylsulfamoyl, Octylsulfamoyl, 2-Ethylsulfamoyl, 2-Methoxyethylsulfamoyl, 2-Ethoxyethylsulfamoyl, 3,6-Dioxaheptylsulfamoyl, 3,6-Dioxaoctylsulfamoyl, 4,8-Dioxanonylsulfamoyl, 3,7-Dioxaoctylsulfamoyl, 3,7-Dioxanonylsulfamoyl, 4,7-Dioxaoctylsulfamoyl, 4,7-Dioxanonylsulfamoyl oder 4,8-Dioxadecylsulfamoyl.

Bevorzugt sind Farbstoffzubereitungen, enthaltend einen oder mehrere Anthrachinonfarbstoffe der Formel I, in der L¹ Wasserstoff, C₁-C₄-Alkyl oder gegebenenfalls durch Methyl substituiertes Phenyl und L⁴ Hydroxy, Amino oder gegebenenfalls durch Methyl substituiertes Phenylamino bedeuten.

Weiterhin bevorzugt sind Farbstoffzubereitungen, enthaltend einen oder mehrere Anthrachinonfarbstoffe der Formel I, in der L² C₁-C₄-Alkoxy, Acetyl, C₁-C₄₋Alkoxycarbonyl oder einen Rest der Formel 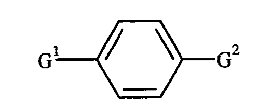 bedeutet, worin G¹ und G² jeweils die obengenannte Bedeutung besitzen, dabei steht G¹ insbesondere für Sauerstoff und G² insbesondere für Wasserstoff.

Weiterhin bevorzugt sind Farbstoffzubereitungen, enthaltend den Chinophthalonfarbstoff der Formel IIa 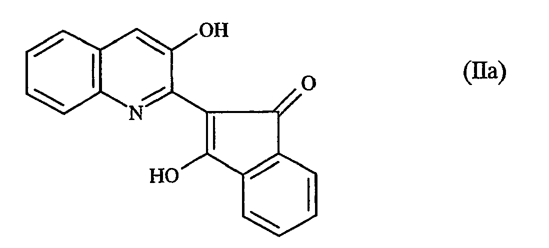 Bei den Farbstoffen der Formel I und II handelt es sich im allgemeinen um bekannte Farbstoffe. Die Anthrachinonfarbstoffe der Formel I sind beispielsweise in K. Venkataraman "The Chemistry of Synthetic Dyes", Vol. III, Seiten 391 bis 413, Academic Press, New York, London, 1970, beschrieben. Die Chinophthalonfarbstoffe der Formel II sind z.B. in der EP-A-83 553 oder der dort zitierten Literatur beschrieben.

Bevorzugt sind Farbstoffzubereitungen, in denen 99 % der in der Zubereitung enthaltenen Farbstoffteilchen kleiner sind als 1 mm.

Weiterhin bevorzugt sind Farbstoffzubereitungen, die solche Farbstoffe aus der Anthrachinon- oder Chinophthalonreihe enthalten, deren Sublimationstemperatur 140 bis 300°C beträgt.

Geeignete Mono- oder Polyazofarbstoffe sind an sich bekannt und in großer Zahl beschrieben, z.B. in K. Venkataraman "The Chemistry of Synthetic Dyes", Vol. VI, Academic Press, New York, London, 1972.

Von besonderer Bedeutung sind Azofarbstoffe, insbesondere Monoazofarbstoffe, mit einer Diazokomponente, die sich von einem Anilin oder von einem fünfgliedrigen aromatischen heterocyclischen Amin ableitet, das ein bis drei Heteroatome, ausgewählt aus der Gruppe, bestehend aus Stickstoff, Sauerstoff und Schwefel, im heterocyclischen Ring aufweist und durch einen Benzol-, Thiophen-, Pyridin- oder Pyrimidinring anelliert sein kann.

Wichtige Monoazofarbstoffe sind beispielsweise solche, deren Diazokomponente sich z.B. von einem Anilin oder von einem heterocyclischen Amin aus der Pyrrol-, Furan-, Thiophen-, Pyrazol-, Imidazol-, Oxazol-, Isoxazol-, Thiazol-, Isothiazol-, Triazol-, Oxadiazol-, Thiadiazol-, Benzofuran-, Benzthiophen-, Benzimidazol-, Benzoxazol-, Benzthiazol-, Benzisothiazol-, Pyridothiophen-, Pyrimidothiophen-, Thienothiophen- oder Thienothiazolreihe ableitet.

Besonders zu nennen sind solche Diazokomponenten, die von einem Anilin oder von einem heterocyclischen Amin aus der Pyrrol-, Thiophen-, Pyrazol-, Thiazol-, Isothiazol-, Triazol-, Thiadiazol-, Benzthiophen-, Benzthiazol-, Benzisothiazol-, Pyridothiophen-, Pyrimidothiophen-, Thienothiophen- oder Thienothiazolreihe stammen.

Von Bedeutung sind weiterhin Azofarbstoffe, insbesondere Monoazofarbstoffe, mit einer Kupplungskomponente aus der Anilin-, Aminonaphthalin-, Aminothiazol-, Diaminopyridin- oder Hydroxypyridonreihe.

Besonders bevorzugt sind Azofarbstoffe der Formel III 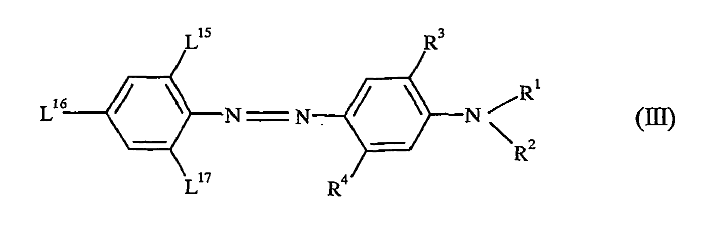 worin
- L¹⁵ und L¹⁷: jeweils Cyano,
- L¹⁶: C₁-C₆-Mkyl,
- R¹ und R²: jeweils C₁-C₆-Alkyl,
- R³: Wasserstoff C₁-C₆-Alkyl oder C₁-C₆-Alkoxy und
- R⁴: Wasserstoff, C₁-C₆-Alkyl oder C₁-C₆-Alkanoylamino bedeuten.

Wie eingangs schon erwähnt, sind die Azofarbstoffe an sich bekannt und z.B. in Venkataraman (loc. cit.), in der EP-A-201 896, DE-A-3 108 077, US-A-4 843 153, GB-A-1 546 803, EP-A-535 490 oder EP-A-544153 beschrieben oder können nach den dort genannten Methoden erhalten werden. Eine Zusammenstellung geeigneter Anthrachinon-, Chinophthalon- oder Azofarbstoffe findet sich beispielsweise im Colour Index sowohl unter Dispersionsfarbstoffen als auch unter Küpenfarbstoffen.

Beispiele für geeignete Anthrachinon-, Chinophthalon- oder Azofarbstoffe sind
- C.I. Vat Yellow 2, 3, 4, 5, 9, 10, 12, 22, 26, 33, 37, 46, 48, 49 und 50;
- C.I. Vat Orange 1, 2, 5, 9, 11,13, 15, 19, 26, 29, 30 und 31;
- C.I. Vat Red 2, 10, 12, 13, 14, 16,19, 21, 31, 32, 37, 41, 51, 52 und 61;
- C.I. Vat Violet 2, 9, 13, 14, 15, 17 und 21;
- C.I. Vat Blue 1 (C.I. Pigment Blue 66), 3, 5, 10, 12, 13, 14, 16, 17, 18, 19, 20, 22, 25, 26, 29, 30, 31, 35, 41, 42, 43, 64, 65, 66, 72 und 74;
- C.I. Vat Green 1, 2, 3, 5, 7, 8, 9, 13, 14, 17, 26, 29, 30, 31, 32, 33, 40, 42, 43, 44 und 49;
- C.I. Vat Brown 1, 3, 4, 5, 6, 9, 11, 17, 25, 32, 33, 35, 38, 39, 41, 42, 44, 45, 49, 50, 55, 57, 68, 72, 73, 80, 81, 82, 83 und 84;
- C.I. Vat Black 1, 2, 7, 8, 9, 13, 14, 16, 19, 20, 22, 25, 27, 28, 29, 30, 31, 32, 34, 36, 56, 57, 58, 63, 64 und 65;

Als Komponente (B) enthalten die erfindungsgemäßen Pigmentzubereitungen 0,1 bis 20 Gew.-% eines wasserlöslichen Dispergiermittel auf der Basis eines Naphthalinsulfonsäure-Formaldehyd-Kondensationsproduktes mit einem mittleren Molekulargewicht von mindestens 11000 g/mol.

Bevorzugt weisen die erfindungsgemäß als Dispergiermittel eingesetzten Naphthalinsulfonsäure-Formaldehyd-Kondensationsprodukte ein mittleres Molekulargewicht von 11000 bis 35 000, besonders bevorzugt von 11000 bis 20 000 g/mol auf.

Als Dispergiermittel (B) sind Kondensationsprodukte mit einem Sulfonsäuregruppengehalt von maximal 40 Gew.-% bevorzugt.

Die Kondensationsprodukte (B) sind durch Sulfonieren von Naphthalin und anschließendes Kondensieren der gebildeten Naphthalinsulfonsäuren mit Formaldehyd erhältlich.

Bevorzugt werden die erfindungsgemäß eingesetzten Naphthalinsulfonsäure-Formaldehyd-Kondensationsprodukte nach der folgenden allgemeinen Herstellvorschrift erhalten:

1 - 3 Gewichtsteile Naphtalin werden mit 1 -3 Gewichtsteilen einer Schwefelsäure mit einer Konzentration von 85 - 100 Gew.-% oder Oleum mit einem Gehalt an freiem SO₃ von 2 bis 45 Gew.-% sulfoniert. Die Sulfonierung kann bei Temperaturen von 80 bis 190°C durchgeführt werden, die Reaktionszeiten betragen von 0,5 bis 10 Stunden. Bei der Sulfonierung können Hilfsmittel wie Borsäure anwesend sein, bevorzugt in einer Konzentration von 0,5 bis 5 Gew-%, bezogen auf Schwefelsäure bzw. Oleum. Nach der Sulfonierung wird das Reaktionsgemisch mit 0,5 bis 2 Teilen Wasser verdünnt und anschließend mit 0,3 bis 1,8 Teilen wässriger Formaldehyd-Lösung mit einer Konzentration von 20 bis 40 Gew.-% Formaldehyd bei einer Temperatur von 80 bis 180°C kondensiert. Das Kondensationsgemisch wird anschließend mit bis zu 0,5 Teilen Wasser verdünnt und mit Natronlauge auf einen pH-Wert von 4 bis 10 eingestellt. Das Kondensationsgemisch wird schließlich nochmals mit 0,5 Teilen Wasser verdünnt, mit Natronlauge und Kalkmilch versetzt und von ausfallendem CaSO₄ abfiltriert. Anschließend wird der pH-Wert auf einen Wert zwischen 4 und 10 eingestellt. Zum Schluss wird mit Wasser die Endkonzentration von 15 bis 50 Gew.-% Trockengehalt eingestellt.

Nach dieser Herstellvorschrift wird ein Naphthalinsulfonsäure-Formaldehyd-Kondensationsprodukt mit dem gewünschten Molekulargewicht erhalten.

Als Komponente (C) enthalten die erfindungsgemäßen Farbstoffzubereitungen 0,1 bis 90 Gew.-% eines oder mehrerer ein- oder mehrwertiger Alkohole.

Geeignete ein- oder mehrwertige Alkohole sind in der Regel Alkanmono- oder -polyole, insbesondere Polyole, die 2 bis 8 Kohlenstoffatome, vorzugsweise 2 bis 6 Kohlenstoffatome und bis zu 4, vorzugsweise 2 bis 4, alkoholische Hydroxygruppen aufweisen. Beispielhaft sind zu nennen Ethan-1,2-diol, Propan-1,2-diol, Propan-1,3-diol, Glycerin, Pentan-1,2,5-txiol oder Hexan-1,2,6-triol, 1,2-Hexandiol, 1,2-Pentandiol.

Darüber hinaus können die Farbstoffzubereitungen, bezogen auf das Gewicht der Zubereitung, bis zu 10 Gew.-%, vorzugsweise 0,1 bis 10 Gew.-%, eines Polyalkylenglykols enthalten.

Geeignete Polyalkylenglykole, die in den erfindungsgemäßen Farbstoffzubereitungen enthalten sein können, sind insbesondere Polyethylen- oder Polypropylenglykole, die beispielsweise ein mittleres Molekulargewicht von 100 bis 1000, vorzugsweise 100 bis 600 und insbesondere ca. 400 aufweisen. Gegebenenfalls können auch Ethylenoxid/Propylenoxid-Copolymere zur Anwendung gelangen.

Bevorzugt sind Farbstoffzubereitungen, die jeweils bezogen auf das Gewicht der Zubereitung 1 bis 50 Gew.-% eines oder mehrerer Anthrachinon-, Chinophthalon- oder Azofarbstoffe als Komponente (A), 0,5 bis 20 Gew.-% der Dispergiermittel (B) und 1 bis 80 Gew.-%, vorzugsweise 2 bis 50 Gew.-% eines oder mehrerer ein- oder mehrwertiger Alkohole als Komponente (C) enthalten.

Als Komponente (D) können die erfindungsgemäßen Farbstoffzubereitungen übliche Hilfsmittel, wie Konservierungsmittel, Antioxidantien, Schaumverhinderungsmittel, Tenside oder Mittel zur Regulierung der Viskosität enthalten. Diese Mittel sind an sich bekannt und handelsüblich. Wenn diese Mittel in den erfindungsgemäßen Farbstoffzubereitungen zugegen sind, beträgt ihre Gesamtmenge bis zu 5 Gew.-%, bevorzugt bis zu 1 Gew.-%, bezogen auf das Gewicht der Zubereitung.

In bevorzugten Farbstoffzubereitungen sind Tenside zur Reduzierung der Oberflächenspannung und zur Verbesserung des Benetzungsverhaltens im Tintenkopf enthalten.

Bevorzugte Farbstoffzubereitungen enthalten Tenside auf der Basis von ethoxylierten oder propoxylierten Fett- oder Oxoalkoholen, Propylenoxid-Ethylenoxid-Blockcopolymeren, Ethoxylaten von Ölsäure oder Alkylphenolen, Alkylphenolethersulfaten, Alkylpolyglycosiden, Alkylphosphonaten, Alkylphenylphosphonaten, Alkylphenylphosphaten oder Alkindiolen.

Selbstverständlich beträgt die Summe der Bestandteile in den erfindungsgemäßen Farbstoffzubereitungen jeweils 100 Gew.-%. Sofern die Summe der Bestandteile der erfindungsgemäßen Farbstoffzubereitungen einen Wert ergibt, der kleiner als 100 Gew.-% ist, ist der restliche Bestandteil in der Regel Wasser (Komponente E).

Üblicher Weise beträgt der Wassergehalt von erfindungsgemäßen Farbstoffzuberreitungen, die als Drucktinten verwendet werden, 50 bis 90 Gew.-%, bezogen auf das Gesamtgewicht der Farbstoffzubereitungen.

Die Oberflächenspannung der erfindungsgemäßen Farbstoffzubereitungen beträgt in der Regel 20 bis 70 Nm/m, vorzugsweise 25 bis 60 Nm/m.

Die Viskositäten der erfindungsgemäßen Farbstoffzubereitungen beträgt in der Regel 2 bis 300 mPa s, vorzugsweise 2 bis 150 mPa s.

Der pH-Wert der erfindungsgemäßen Farbstoffzubereitungen liegt im allgemeinen bei 5 bis 11, vorzugsweise 6 bis 10.

Die Herstellung der neuen Farbstoffzubereitungen erfolgt auf an sich bekanntem Weg. So kann man den Farbstoff, beispielsweise in Form eines Presskuchens, zusammen mit dem Dispergiermittel, dem ein- oder mehrwertigen Alkohol und gegebenenfalls Polyalkylenglykol in Gegenwart von Wasser mischen und in einer geeigneten Apparatur vordispergieren. Die resultierende Mischung kann dann in einer Mühle behandelt werden, um die gewünschte Größe der Farbstoffteilchen einzustellen. Schließlich kann man die Endeinstellung vornehmen, indem man noch entsprechende Mengen Wasser, gegebenenfalls Polyalkylenglykol und gegebenenfalls weitere Hilfsmittel zusetzt und nach dem Mischen mittels eines Siebs, vorzugsweise mit einer Porengröße von 1 mm, filtriert.

Die erfindungsgemäßen Farbstoffzubereitungen eignen sich in vorteilhafter Weise als Tinten im Ink-Jet-Verfahren sowie für den Sublimations-Transferdruck.

Beim Ink-Jet-Verfahren (Tintenstrahldruck-Verfahren) verwendet man üblicherweise wässrige Tinten, die in kleinen Tröpfchen direkt auf das Substrat gesprüht werden. Man unterscheidet dabei ein kontinuierliches Verfahren, bei dem die Tinte gleichmäßig durch eine Düse gepresst und durch ein elektrisches Feld, abhängig vom zu druckenden Muster, auf das Substrat gelenkt wird, und ein unterbrochenes Tintenstrahl- oder "Drop-on-Demand"-Verfahren, bei dem der Tintenausstoß nur dort erfolgt, wo ein farbiger Punkt gesetzt werden soll. Bei dem letztgenannten Verfahren wird entweder über einen piezoelektrischen Kristall oder eine beheizte Kanüle (Bubble- oder Thermo-Jet-Verfahren) Druck auf das Tintensystem ausgeübt und so ein Tintentropfen herausgeschleudert. Solche Verfahrensweisen sind in Text. Chem. Color, Band 19 (8), Seiten 23 bis 29, 1987, und Band 21 (6), Seiten 27 bis 32, 1989, beschrieben.

Besonders geeignet sind die erfindungsgemäßen Farbstoffzubereitungen als Tinten für das Bubble-Jet-Verfahren oder für das Verfahren mittels eines piezoelektrischen Kristalls.

Geeignete Substrate für das Ink-Jet-Verfahren sind neben Papier auch die im folgenden aufgeführten Trägermaterialien.

Geeignete Träger sind insbesondere textile Materialien, z.B. Fasern, Garne, Zwirne, Maschenware, Webware oder Non-wovens aus Polyester, modifiziertem Polyester, z.B. anionisch modifiziertem Polyester, Mischgewebe von Polyester mit Cellulose, Baumwolle, Viskose oder Wolle, Polyamid, Polyacrylnitril, Triacetat, Acetat, Polycarbonat, Polypropylen oder Polyvinylchlorid, Polyestermikrofasern oder auch mit Kunststoffen beschichtete Träger, wie Metallfolien, Glas oder Keramik.

Die erfindungsgemäßen Farbstoffzubereitungen eignen sich besonders gut für den Druck auf Textil. Das Substrat ist dabei, abhängig von der Farbstoffklasse (Küpenfarbstoff, Dispersionsfarbstoff oder eine Mischung derselben), Baumwolle, Viscose, Polyester oder ein Mischgewebe aus Baumwolle oder Viscose und Polyester. Der Druck kann direkt oder indirekt im Sublimationstransferdruck erfolgen.

Beim Sublimationstransferdruck wird ein Muster zunächst auf einem Zwischenträger vorgebildet und anschließend durch Hitzeeinwirkung auf einen Träger übertragen. Der Farbstoff kann sowohl beim Transfer selbst als auch in einem anschließenden Fixier- und Nachbehandlungsprozess fixiert werden. Dieses Verfahren ist allgemein bekannt und z.B. in Ullmann's Encyclopedia of Industrial Chemistry, 5th Edition, Band A26, Seiten 499 bis 501, beschrieben.

Die neuen Farbstoffzubereitungen zeichnen sich dadurch aus, daß sie beim Ink-Jet-Verfahren zu keiner Verstopfung der Düsen führen. Weiterhin erhält man bei ihrer Anwendung streifenfreie Drucke.

Die Erfindung wird durch die nachstehenden Beispiele näher erläutert.

### Beispiele

Dispergiermittel 1, 2 und 3 sind kommerzielle Dispergiermittel, wie sie auf dem Markt erhältlich sind. Dispergiermittel 1 ist ein Naphtalinsulfonsäure-Formaldehyd-Kondensationsprodukt, welches ein mittleres Molekulargewicht von ca. 6000 aufweist. Dispergiermittel 2 ist eine wässrige Lösung eines Naphtalinsulfonsäure-Formaldehyd-Kondensationsprodukt, welches ebenfalls ein mittleres Molekulargewicht von ca. 6000 aufweist. Dispergiermittel 3 ist hingegen eine flüssige Formulierung eines Arylsulfonsäure-Formaldehyd-Kondensationsproduktes, welches ein mittleres Molekulargewicht von ca. 9000 g/mol aufweist.

Das erfindungsgemäß eingesetzte Dispergiermittel 4 aus Naphtalinsulfonsäure-Formaldehyd-Kondensationsprodukt ist eine flüssige Formulierung mit einem mittleren Molekulargewicht von 16 000 und einem Wirkstoffgehalt von 37%. Das erfindungsgemäße Dispergiermittel 5 ist eine Pulverformulierung mit einem mittleren Molekulargewicht von 18 000 g/mol und einem Wirkstoffgehalt von 79%. Darüber hinaus sind Dispergiermittel 4 und 5 zu mehr als 90% aus dem Abwasser eliminierbar.

### Beispiele 1 bis 4 und Vergleichsbeispiele V1 bis V5

### Dispergiereigenschaften der Dispergiermittel

Die Dispergiereigenschaften wurden anhand von Dispergiertests und Mahlversuchen ermittelt.

Die Dispergiereigenschaften der Dispergiermittel für Dispersionsfarbstoffe wurden nach dem folgenden Verfahren bestimmt:

100 ml Dispersion aus 0,5 g Palanil Scharlach und x g Dispergiermittel werden auf pH 5 eingestellt und 30 min unter dem Eigendruck bei 130°C gehalten. Anschließend wird auf 63°C abgekühlt und bei dieser Temperatur die resultierende Suspension über einen Blaubandfilter abfiltriert. Der beobachtbare Rückstand wird anschließend visuell bewertet.

| Beispiel | Komponente | Einsatzmenge / Wirkung | | Einsatzmenge / Wirkung | | Einsatzmenge / Wirkung | |
|---|---|---|---|---|---|---|---|
| | | g/l | | g/l | | g/l | |
| V1 | Dispergiermittel 1 | | | 1 | Mäßig | 2 | Gut |
| V2 | Dispergiermittel 2 | | | 2 | Mäßig | 4 | Gut |
| V3 | Dispergiermittel 3 | | | 2 | Mäßig | 4 | Gut |
| 1 | Dispergiermittel 4 | | | 2 | Gut | 4 | Sehr gut |
| 2 | Dispergiemittel 5 | 0,5 | Mäßig | 1 | Gut | 2 | Sehr gut |

Es zeigt sich, dass die erfindungsgemäß eingesetzten Dispergiermittel 4 und 5 ein deutlich besseres Dispergierverhalten aufweisen als die kommerziellen Vergleichsprodukte.

Die Dispergiereigenschaften der Dispergiermittel für Küpenfarbstoffe wurden nach dem folgenden Verfahren bestimmt:

100 ml Stammküpe bestehend aus 0,5 g/l Indanthren Brillantviolett RRN, 12 ml/l Natronlauge (38°Bé) und 4 g/l Natriumdithionit (100%) werden x g Dispergiermittel zugesetzt. Anschließend wird unter Rühren 5 ml 6 gew.-%ige Wasserstoffperoxidlösung zugegeben und ca. 1 min gerührt. Ein Weißbandfilter (Schleicher & Schüll, 90 mm Durchmesser, No. 300109) wird auf die offene Seite eines Becherglases gelegt und 1 ml der erhaltenen Flotte wird in die Mitte des Filters mit einer Pipette aufgetropft. Man lässt dann an der Luft trocknen und beurteilt das Fließbild. Schlechte Dispergiermittel weisen deutliche Agglomerationen auf, gute hingegen zeigen einen deutlichen Fluss fein dispergierter, reoxidierter Küpenpigmente über das Filterpapier.

| Beispiel | Komponente | Einsatzmenge / Wirkung | | Einsatzmenge / Wirkung | | Einsatzmenge / Wirkung | |
|---|---|---|---|---|---|---|---|
| | | g/l | | g/l | | g/l | |
| V4 | Dispergiermittel 1 | 0,5 | Mäßig | 1 | Gut | 2 | Gut |
| V5 | Dispergiermittel 2 | 1 | Mäßig | 2 | Gut | 4 | Sehr gut |
| 3 | Dispergiermittel 4 | 0,5 | Mäßig | 1 | Gut | 2 | Sehr gut |
| 4 | Dispergiemittel 5 | 0,5 | Mäßig | 1 | Gut | 2 | Sehr gut |

Auch hier ist deutlich zu sehen, dass die erfindungsgemäß eingesetzten Dispergiermittel 4 und 5 die deutlich besseren Dispergiereigenschaften aufweisen.

### Beispiel 5

### Beurteilung des Anschmutzungsverhaltens durch Dispergiermittel

5 g Polyestergewebe wurde 60 Min bei 130°C in einer blinden Färbeflotte enthaltend 5 g/l des zu prüfenden Dispergiermittels, Essigsäurepuffer zur Einstellung des pH-Wertes auf 4,5 im Flottenverhältnis 1:20 gefärbt. Anschließend wurde mit VE-Wasser gespült, das Textil getrocknet und das Anschmutzungsverhalten visuell beurteilt.

| Hilfsmittel | Beurteilung |
|---|---|
| Dispergiermittel 1 | Gut |
| Dispergiermittel 2 | Gut |
| Dispergiermittel 3 | Schlecht |
| Dispergiermittel 4 | Gut |
| Dispergiermittel 5 | Gut |

Die erfindungsgemäß eingesetzten Dispergiermittel 4 und 5 schneiden bezüglich des Anschmutzverhaltens mindestens ebenso gut ab wie die Dispergiermittel des Standes der Technik.

### Beispiel 6

### Mahlverhalten von Dispergiermittel 4 im Vergleich zu Dispergiermittel 3

15 g Disperse Rot 60, 7,5 g Polyethylenglykol (mittleres Molekulargewicht 400 g/mol), 15 g Dispergiermittel 3 bzw. Dispergiermittel 4, 0,4 g 50 gew.-%ige Lösung von Glutardialdehyd und 0,5 g 47 gew%-ige Lösung von Tetramethylolacetylendiharnstoff werden mit Wasser zum Gesamtgewicht von 100 g aufgefüllt und in einer Mühle angeteigt. Danach wird der pH-Wert mit 0,5 Teilen Triethanolamin auf 8,5 gestellt. Anschließend wird die Mischung in einer Rührwerkskugelmühle gemahlen. Die Teilchengröße nach definiertem Energieeintrag der Mühle wird bestimmt und verglichen.

| | Dispergiermittel 3 | | Dispergiermittel 4 | |
|---|---|---|---|---|
| kWh/t | x50 | x16 | x50 | x16 |
| 2000 | 0,52 | 1,00 | | |
| 3000 | 0,44 | 0,87 | 0,37 | 0,74 |
| 4000 | 0,39 | 0,77 | 0,35 | 0,69 |
| 5000 | 0,36 | 0,71 | 0,33 | 0,66 |

Dabei bedeuten x50 bzw. x16, dass 50% bzw. 16% der Teilchen eine Teilchengröße oberhalb des angegebenen Wertes aufweisen. Aus obiger Tabelle ist der Mahlfortschritt zu erkennen. Es ist deutlich zu sehen, das mit Dispergiermittel 4 ein deutlich besseres Mahlergebnis erhalten wird als mit Dispergiermittel 3.

### Beispiel 7

### Herstellung und Test der Mixkomponente

In einem Dissolver wurden 15,0 g Disperse Rot 60, 6,13 g Polyethylenglykol (mittleres Molekulargewicht 400 g/mol), 33,0 g erfindungsmäß eingesetztes Dispergiermittel 4, 0,4 g 50 gew.-%ige wässrige Lösung von Glutardialdehyd, 0,5 g 4 gew.-%ige wässrige Lösung von Tetramethylolacetylendiharnstoff und 0,5 g Triethanolamin vermischt und mit 3556 g vollentsalztem Wasser aufgefüllt. Diese Mischung wurde für circa 5 Stunden in einer Kugelmühle (Firma Molynex) vermahlen, bis der maximale Teilchendurchmesser 1 µm betrug. 10 g der Mixkomponente wurden 14 Tage auf 60°C erwärmt, wobei eine Abtrennung von Dispersionsfarbstoff aus der Dispersion bzw. ein Teilchenwachstum nicht beobachtet werden konnte.

### Beispiel 8

### Herstellung einer Tinte

In einem Becherglas wurden 40 g der jeweiligen Mixkomponente mit 30 g Glycerin, 10 g Polyethylenglykol (mittleres Molekulargewicht 400 g/mol), 0,4 g Heptamethyltrisiloxanallylalkoxylat-Copolymer und 119,6 g vollentsalztes Wasser vermischt. Die so erhaltene Tinte wurde mit einem Piezokopfdrucker EPSON 3000 Stylus Color auf DIN A3-Papier verdruckt. Es wurden Drucke mit vorzüglicher Schärfe der Linien erhalten. Auch nach 40 Blatt Papier war keine Düse ausgefallen, desgleichen nicht nach 10 m² Druck im Dauerbetrieb. Die Laufeigenschaften der Tinte sind exzellent. Die Drucktests wurden nach 5 Tagen Stehen der Tinte bei 60°C wiederholt, auch in diesem Fall wurde ein einwandfreies Druckbild und Laufverhalten beobachtet. Nach Lagerung der Tinte für 21 Tage bei 60°C konnte keine Abtrennung von Dispersionsfarbstoff aus der Dispersion und kein Teilchenwachstum beobachtet werden. Die Oberflächenspannung der Tinte betrug 34 mN/m, die Viskosität 3,6 mPa s.

Gleich gute Ergebnisse werden z.B. erhalten mit Tinten auf der Basis von Disperse Blau 72, Disperse Blau 332, Disperse Blau 359, Disperse Gelb 54, Disperse Blau 60, Disperse Blau 77, Disperse Blau 73, Disperse Rot 86, Disperse Rot 91, Disperse Rot 92, Solvent Gelb 163, Disperse Rot 277, Disperse Orange 44, Disperse Gelb 198, Disperse Rot 279, Vat Rot 41, Vat Blau 1, Vat Blau 5, und Vat Gelb 46.

## Patentansprüche

1. Farbstoffzubereitungen, enthaltend, jeweils bezogen auf das Gewicht der Zubereitung,
a) 0,1 bis 30 Gew.-% eines oder mehrerer Anthrachinon-, Chinophthalon- oder Azofarbstoffe, die frei sind von ionischen Gruppen, als Komponente (A),
b) 0,1 bis 20 Gew.-% eines Dispergiermittels, bestehend aus Naphtalinsulfonsäure-Formaldehyd-Kondensationsprodukt mit einem mittleren Molekulargewicht von mindestens 11 000 g/mol, als Komponente (B),
c) 0,1 bis 90 Gew.-% eines oder mehrerer ein- oder mehrwertiger Alkohole als Komponente (C),
d) 0 bis 5 Gew.-% üblicher Hilfsmittel als Komponente (D), und
e) gegebenenfalls Wasser zur Ergänzung auf 100 Gew.-%.

2. Verwendung von Farbstoffzubereitungen nach Anspruch 1 als Tinten für den Ink-Jet-Druck.

3. Verwendung von Farbstoffzubereitungen nach Anspruch 1 für den Sublimationstransferdruck.

4. Verwendung von Farbstoffzubereitungen nach Anspruch 1 zum Bedrucken von textilen Substraten.

5. Verfahren zum Bedrucken textiler Substrate nach dem Ink-Jet-Druck-Verfahren unter Verwendung von Farbstoffzubereitungen nach Anspruch 1.

6. Die nach dem Verfahren gemäß Anspruch 5 erhältlichen bedruckten textilen Substrate.

7. Verfahren zum Bedrucken textiler Substrate nach dem Sublimationstransferdruck-Verfahren unter Verwendung von Farbstoffzubereitungen nach Anspruch 1

8. Die nach dem Verfahren gemäß Anspruch 7 erhältlichen bedruckten textilen Substrate.

## Claims

1. Dye preparations comprising, each percentage being based on the weight of the preparation,
a) from 0.1% to 30% by weight of one or more anthraquinone, quinophthalone or azo dyes which are free of ionic groups as a component (A),
b) from 0.1% to 20% by weight of a dispersant consisting of a naphthalenesulfonic acid-formaldehyde condensation product having an average molecular weight of at least 11 000 g/mol, as a component (B),
c) from 0.1% to 90% by weight of one or more mono- or polyhydric alcohols as a component (C),
d) from 0% to 5% by weight of customary assistants as a component (D), and
e) if appropriate water ad 100% by weight.

2. The use of dye preparations according to claim 1 as inks for ink jet printing.

3. The use of dye preparations according to claim 1 for sublimation transfer printing.

4. The use of dye preparations according to claim 1 for printing textile substrates.

5. The process for printing textile substrates by the ink jet printing process using dye preparations according to claim 1.

6. The printed textile substrates obtainable by the process according to claim 5.

7. The process for printing textile substrates by the sublimation transfer printing process using dye preparations according to claim 1.

8. The printed textile substrates obtainable by the process according to claim 7.

## Revendications

1. Préparations de colorants contenant respectivement par rapport au poids de la préparation :
a) 0,1 à 30 % en poids d'un ou plusieurs colorants de types anthraquinone, quinophtalone ou azo, qui sont exempts de groupements ioniques, comme composant (A),
b) 0,1 à 20 % en poids d'un agent dispersant, constitué d'un produit de condensation d'acide naphtalènesulfonique-formaldéhyde ayant un poids moléculaire moyen en poids d'au moins 11 000 g/mole, comme composant (B),
c) 0,1 à 90 % en poids d'un ou plusieurs alcools monovalents ou polyvalents comme composant (C),
d) 0 à 5 % en poids d'adjuvants usuels comme composant (D), et
e) éventuellement de l'eau pour compléter à 100 % en poids.

2. Utilisation de préparations de colorants selon la revendication 1 comme encres pour impression par jet d'encre.

3. Utilisation de préparations de colorants selon la revendication 1 pour impression par transfert par sublimation.

4. Utilisation de préparations de colorants selon la revendication 1 pour imprimer des substrats textiles.

5. Procédé d'impression de substrats textiles selon le procédé d'impression par jet d'encre en utilisant des préparations de colorants selon la revendication 1.

6. Substrats textiles imprimés que l'on peut obtenir selon le procédé de la revendication 5.

7. Procédé d'impression de substrats textiles selon le procédé d'impression par transfert par sublimation en utilisant des préparations de colorants selon la revendication 1.

8. Substrats textiles imprimés que l'on peut obtenir selon le procédé de la revendication 7.
